# EUROPÄISCHE PATENTANMELDUNG

(11) **EP 1 245 480 A2**
(43) Veröffentlichungstag der Anmeldung: **02.10.2002**
(21) Anmeldenummer: 02006140.4
(22) Anmeldetag: 19.03.2002
(51) Int. Cl.: B62J 1/06

(54) **Federnde Sattelstütze**

(30) Priorität: 27.03.2001 DE 20105369 U
(71) Anmelder: Siebzehnrübl, Hans, 85247 Schwabhausen (DE); Ritter, Armin, 80336 Muenchen (DE)
(72) Erfinder: Hart, Christian, 80639 München (DE)
(74) Vertreter: Beck, Alexander, Dipl.-Ing.

(57) **Zusammenfassung**

Federnde Sattelstütze mit zwei teleskopartig ineinander greifenden Rohrhülsen (4, 7), deren äussere und untere (4), in den Rahmen eines Fahr- oder Motorrades eingesetzt werden kann, während die innere und obere (7) den Sattel trägt, wobei ein Ineinanderschieben der Rohrhülsen (4, 7) nur gegen den Druck einer Druckfeder (2, 3) möglich ist und die innere Rohrhülse (7) in der äusseren Rohrhülse (4) längs verschiebbar, aber verdrehfest angeordnet ist, und als Druckfeder alleine oder zusätzlich zu einer metallischen Schraubenfeder (3) ein oder mehrere zylindrische Elastomerkörper (2) vorgesehen sind, die mit einer axial hindurchlaufenden Bohrung (20) und/oder auf ihrer äußeren Mantelfläche mit horizontal umlaufenden Nuten (24) versehen sind.

## Beschreibung

Die vorliegende Erfindung betrifft eine federnde Sattelstütze mit zwei teleskopartig ineinandergreifenden Rohrhülsen, deren äußere und untere in den Rahmen eines Fahr- oder Motorrades eingesetzt werden kann, während die innere und obere den Sattel trägt. Dabei ist ein Ineinanderschieben der Rohrhülsen nur gegen den Druck einer Druckfeder möglich und die innere Rohrhülse ist in der äußeren Rohrhülse längs verschiebbar aber verdrehfest angeordnet.

Eine sehr gute Zusammenfassung des Standes der Technik und der Problematik hinsichtlich federnder Sattelstützen befindet sich in dem Artikel in der Fachzeitschrift "Bike" Nr. 1 von 2001, Seiten 46 bis 51. Aus diesem Artikel läßt sich auch entnehmen, daß es derzeit am Markt noch keine wirklich guten Lösungen für gefederte Sattelstützen gibt. Das Problem liegt dabei darin, daß beim Fahrradfahren die Sattelstützen nur wenig einfedern dürfen, um die Physiologie des Tretvorgangs nicht zu beeinflussen. Es muß also mit einem sehr geringen Federweg ein möglichst guter Komfort (Stoßabsorption) erzielt werden. Dabei ist von besonderer Bedeutung, daß die Federungscharakteristik möglichst genau auf das jeweilige Körpergewicht des Fahrers eingestellt wird. Nur dann kann auf dem geringen verfügbaren Federweg eine Federungswirkung erzielt werden, die ausreichenden Komfort verspricht.

Der zu federnden Sattelstützen nächstgelegene Stand der Technik ergibt sich dabei aus den deutschen Patentschriften 190 369 und 906 182.

Ausgehend von diesem Stand der Technik ist es Aufgabe der vorliegenden Erfindung, eine solche federnde Sattelstütze dergestalt weiterzubilden, daß ein optimaler Federungskomfort und eine leichte und sichere Einstellung der Federvorspannung auf das Gewicht des jeweiligen Fahrers möglich ist.

Diese Aufgabe wird erfindungsgemäß durch eine federnde Sattelstütze mit zwei teleskopartig ineinandergreifenden Rohrhülsen, deren äußere und untere in den Rahmen eines Fahroder Motorrades eingesetzt werden kann, während die innere und obere den Sattel trägt, wobei ein Ineinanderschieben der Rohrhülsen nur gegen den Druck einer Druckfeder möglich ist und die innere Rohrhülse in der äußeren Rohrhülse längs verschiebbar, aber verdrehfest angeordnet ist, gelöst, bei der als Druckfeder alleine oder zusätzlich zu einer metallischen Schraubenfeder ein oder mehrere zylindrische Elastomerkörper vorgesehen sind, die mit einer axial hindurchlaufenden Bohrung und/oder auf der äußeren Mantelfläche mit horizontal umlaufenden Nuten versehen sind.

Bisher befinden sich am Markt lediglich federnde Sattelstützen mit ausschließlich metallischen Schraubenfedern, ausschließlich Elastomer-Vollkörpern oder einer Kombination aus beiden. Das grundsätzliche Problem dabei ist, daß metallische Schraubenfedern wegen ihrer linearen Federungscharakteristik und der geringen zur Verfügung stehenden Federwege entweder sehr hart gewählt werden müssen, wodurch die Federung bei geringen Erschütterungen unkomfortabel wird, oder bei geringer Härte den Stoß nicht mehr vollständig aufnehmen können, und in den Anschlag fahren. Bei Elastomer-Federelementen, deren Federungscharakteristik schon bei geringer Kompression steil ansteigt, liegt das Problem vor, daß bei geringen Geschwindigkeiten und kleinen Erschütterungen eine zu geringe Federung erfolgt und die Federung bei starken Unebenheiten und hohen Fahrgeschwindigkeiten zu hart wird, da die Federcharakteristik solcher Elastomerkörper zu steil ansteigt. Auch durch die Kombination von metallischen Schraubenfedern mit Elastomer-Vollkörpern konnte bisher keine befriedigende Federungscharakteristik erzielt werden, wie aus dem oben genannten Artikel in der Fachzeitschrift "Bike" ersichtlich.

Die vorliegende Erfindung beruht nun auf der Erkenntnis, daß Elastomerkörper, die mit umlaufenden Nuten und/oder einer axial hindurchlaufenden Bohrung versehen sind, erheblich bessere Federcharakteristiken aufweisen, da die Federungscharakteristik eines solchen Elastomerkörpers nicht so steil ansteigt. Eine solche Lösung war dem Stand der Technik bisher nicht zu entnehmen.

Eine weitere Verbesserung der Federeigenschaften der zylindrischen Elastomerkörper kann dadurch erzielt werden, daß die axiale Bohrung ebenfalls durch horizontal umlaufende Nuten erweitert ist.

Besonders bevorzugt ist es dabei, die Nuten V-förmig oder keilförmig auszubilden.

Die erfindungsgemäße Aufgabe kann auch durch eine federnde Sattelstütze mit zwei teleskopartig ineinandergreifenden Rohrhülsen gelöst werden, deren äußere und untere in den Rahmen eines Fahr- oder Motorrades eingesetzt werden kann, während die innere und obere den Sattel trägt, wobei ein Ineinanderschieben der Rohrhülsen nur gegen den Druck einer Druckfeder möglich ist und die innere Rohrhülse in der äußeren Rohrhülse längs verschiebbar, aber verdrehfest angeordnet ist und die Druckfeder mittels einer in einem Gewinde am unteren Ende der äußeren Rohrhülse verdrehbaren Schraube vorgespannt werden kann, bei der eine Anzeigevorrichtung für die Einstellung der Vorspannung vorgesehen ist. Auf diese Weise kann die erfindungsgemäße Sattelstütze sehr leicht auf die für das Gewicht des jeweiligen Fahrers erforderliche Vorspannung eingestellt werden. Eine solche Einstellmöglichkeit ist zwar beispielsweise in der DE 190 369 vorgesehen, dort kann jedoch nicht festgestellt werden, wie groß der aktuell eingestellte Wert der Vorspannung ist. Auf diese Weise kann nur sehr umständlich durch Ausprobieren die optimale Federvorspannung für das Gewicht des jeweiligen Fahrers ermittelt werden. Erfindungsgemäß kann die Anzeigevorrichtung jedoch mit einer Skala versehen werden, die entweder direkt die Gewichtswerte des Fahrers, oder bestimmte Vorspannungswerte angibt, die je nach Wunsch des Fahrers (eher komfortabel oder eher sportlich) in die entsprechenden Gewichtswerte umgewandelt werden können.

Konstruktiv besonders bevorzugt ist es dabei, wenn die Anzeigevorrichtung durch eine Öffnung in der Mantelfläche der äußeren Rohrhülse gebildet ist, durch die erkennbar ist, wie weit die Druckfeder bereits durch die Vorspannung komprimiert ist. Diese Lösung erlaubt eine konstruktiv besonders einfache Realisierung der Anzeigevorrichtung, ohne daß diese bei der Montage oder bei der Benutzung der Sattelstütze in irgendeiner Weise stören könnte.

Erfindungsgemäß kann der Federkomfort einer solchen federnden Sattelstütze mit zwei teleskopartig ineinandergreifenden Rohrhülsen, deren äußere und untere in den Rahmen eines Fahroder Motorrads eingesetzt werden kann, während die innere und obere den Sattel trägt, wobei ein Ineinanderschieben der Rohrhülsen nur gegen den Druck einer Druckfeder möglich ist und die innere Rohrhülse in der äußeren Rohrhülse längs verschiebbar aber verdrehfest angeordnet ist, auch dadurch verbessert werden, indem in dem unteren Ende der inneren Rohrhülse in Längsrichtung verlaufende Schlitze angeordnet sind, in die ein zylindrisches Gleitelement mit in Längsrichtung verlaufenden, rechteckigen Flügeln eingesetzt ist, deren Erstreckung nach außen so groß ist, daß sie aus den Schlitzen heraustreten und in Nuten eingreifen, die an der Innenfläche der äußeren Rohrhülse in Längsrichtung angeordnet sind. Auf diese Weise wird ein Verkanten der beiden Rohrhülsen in der federnden Sattelstütze weitgehend vermieden. Das Verkanten der Rohrhülsen ist eine Hauptursache für mangelnden Federungskomfort solcher federnder Sattelstützen, da die von Bodenunebenheiten stammenden Kräfte auf die Sattelstütze nie senkrecht, sondern stets schräg angreifend wirken (sh. den Artikel in Bike 01/01 wie oben zitiert).

Es ist dabei besonders bevorzugt, das Gleitelement mit einem reibungsverringernden Überzug, beispielsweise aus Teflon, zu überziehen, oder es aus einem reibungsverrindernden Material herzustellen.

Das vorstehend genannte Problem des Verkantens der Hülsen und des dadurch deutlich herabgesetzten Komforts kann erfindungsgemäß auch durch eine federnde Sattelstütze mit zwei teleskopartig ineinandergreifenden Rohrhülsen gelöst werden, deren äußere und untere in den Rahmen eines Fahr- oder Motorrads eingesetzt werden kann, während die innere und obere den Sattel trägt, wobei ein Ineinanderschieben der Rohrhülsen nur gegen den Druck einer Druckfeder möglich ist und die innere Rohrhülse in der äußeren Rohrhülse längs verschiebbar aber verdrehfest angeordnet ist, indem an der inneren Rohrhülse in Längsrichtung verlaufende Nuten vorgesehen sind, in die an der äußeren Rohrhülse angeordnete in Längsrichtung verlaufende Vorsprünge eingreifen.

Es ist dabei besonders bevorzugt, jeweils zwei einander gegenüberliegende Nuten und Vorsprünge vorzusehen. Auf diese Weise ist die Fertigung der erfindungsgemäßen Vorrichtung am einfachsten möglich.

Im folgenden wird die vorliegende Erfindung anhand mehrerer, in den beigefügten Zeichnungen dargestellter Ausführungsbeispiele näher erläutert. Es zeigen:
Figur 1 eine Explosionszeichnung einer ersten erfindungsgemäßen Vorrichtung;
Figur 2 eine Detaildarstellung des Gleitelements der in Fig. 1 dargestellten Ausführungsform;
Figur 3 eine Schnittdarstellung eines erfindungsgemäßen Elastomerkörpers von der Seite;
Figur 4 den Elastomerkörper der Fig. 3 von oben;
Figur 5 eine weitere Ausführungsform der vorliegenden Erfindung mit Anzeigevorrichtung für die Federvorspannung;
Figur 6 eine weitere Ausführungsform der Erfindung;
Figur 7 eine Detaildarstellung der inneren Rohrhülse der Ausführungsform der Erfindung gem. Fig. 6 von der Seite;
Figur 8 eine Schnittdarstellung der Rohrhülse gem. Fig. 7 entlang der Schnittlinie A-A;
Figur 9 eine Darstellung der äußeren Rohrhülse der Ausführungsform der Erfindung gem. Fig. 6 von der Seite;
Figur 10 einen Schnitt der Rohrhülse der Fig. 9 entlang der Schnittlinie B-B; und
Figur 11 einen Längsschnitt der Rohrhülse der Fig. 9.

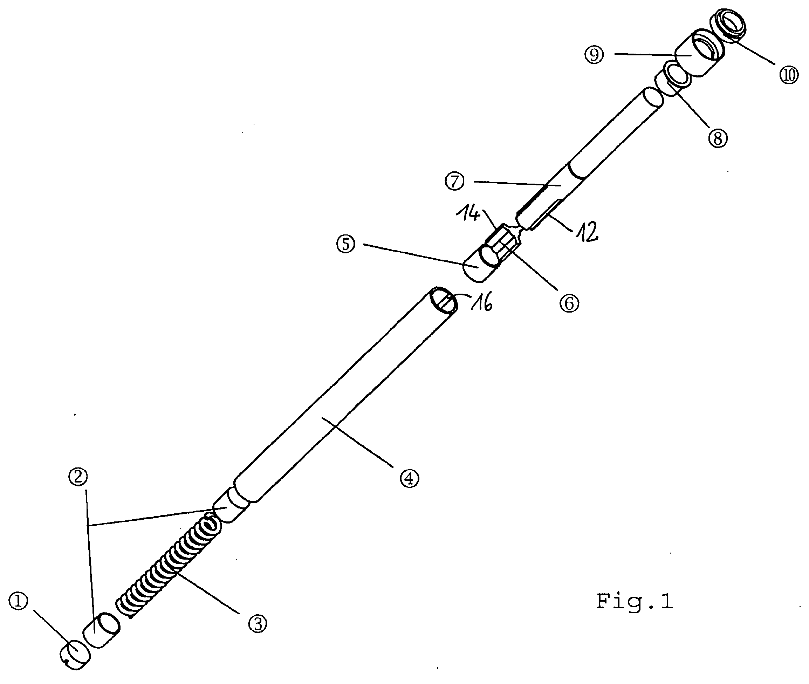

Figur 1 zeigt eine Explosionszeichnung einer erfindungsgemäßen federnden Sattelstütze. Diese umfaßt eine äußere Rohrhülse 4, in die eine Schraubenfeder 3 und zwei Elastomerkörper 2 als Federn eingesetzt sind. Die Vorspannung dieser Federn erfolgt durch eine von unten in ein am unteren Ende der Rohrhülse 4 angebrachtes Innengewinde eingeschraubte Madenschraube 1.

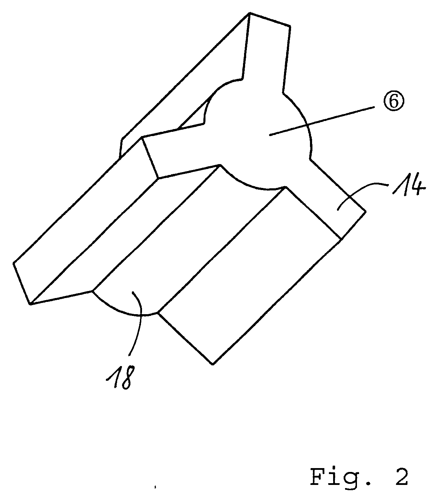

Von oben ist die innere Rohrhülse 7 eingesetzt. Sie ist an ihrem unteren Ende mit in Längsrichtung verlaufenden Schlitzen 12 versehen. In dem dargestellten Ausführungsbeispiel sind drei solche Schlitze 12 vorgesehen, selbstverständlich können auch zwei, vier oder fünf solche Schlitze vorgesehen sein. In diese Schlitze wird ein zylindrisches Gleitelement 6 mit entsprechend vielen, in Längsrichtung verlaufenden, rechteckigen Flügeln 14 eingesetzt. Das Gleitelement 6 ist in Fig. 2 detaillierter dargestellt. Die Fixierung des Gleitelements 6 im unteren Ende der inneren Rohrhülse 7 erfolgt mittels einer Lagerkappe 5, die auf das untere Ende der inneren Rohrhülse 7 aufgesteckt ist und die gleichzeitig die Kraftübertragung zu den Druckfedern 2, 3 bewirkt.

Nach dem Einsetzen des Gleitelements 6 in die Schlitze 12 ragen dessen Flügel 14 aus den Schlitzen 12 hervor und greifen in die in der Innenwandung der äußeren Rohrhülse 4 vorgesehenen Nuten 16 ein, die an der Innenfläche der äußeren Rohrhülse 4 in Längsrichtung angeordnet sind. Das obere Ende der inneren Rohrhülse 7 wird mittels einer Gleitbuchse 8 im oberen Ende der äußeren Rohrhülse 4 gelagert. Die Gleitbuchse 8 ist dabei mittels eines Schraubdeckels 9 mit dem oberen Ende der äußeren Rohrhülse 4 verbunden, wo ein entsprechendes Gewinde vorgesehen ist. In dem Schraubdeckel 9 kann noch eine Dichtung 10 vorgesehen sein, die das Eindringen von Schmutz und Flüssigkeiten in das Innere der äußeren Rohrhülse 4 entlang der inneren Rohrhülse 7 verhindert.

Im zusammengebauten Zustand steht die Rohrhülse 7 um mindestens den Federweg aus der Schraubkappe 9 hervor und tritt dabei auch durch die Dichtung 10 hindurch.

Die Rohrhülse 7 kann dabei vollständig als Rohr mit einer durchgehenden Bohrung ausgebildet sein. Um Eintritt von Feuchtigkeit und Schmutz in die Sattelstütze zu verhindern ist die innere Rohrhülse 7, wie hier dargestellt, vorteilhafterweise an ihrem oberen Ende verschlossen. Die Rohrhülse 7 kann auch teilweise aus Vollmaterial bestehen und lediglich im Bereich der Schlitze 12 eine entsprechende mittige koaxiale Bohrung aufweisen.

Im folgenden wird das Gleitelement 6 anhand der Darstellung in Fig. 2 näher erläutert. Das Gleitelement 6 besteht aus einem im wesentlichen zylindrischen Grundkörper 18, an dem drei rechteckige Flügel 14 entlang der Mantelfläche und parallel zur Achse des zylindrischen Grundkörpers 18 angeordnet sind. Die Flügel 18 sind dabei gleichweit (jeweils 120°) voneinander beabstandet. Im vorliegenden Fall weisen sie eine quaderförmige Form auf, ihre Außenflächen verlaufen parallel zur jeweiligen Tangente an die Mantelfläche des zylindrischen Grundkörpers 18, ihre Stirnflächen gehen in die jeweiligen Stirnflächen des Zylinders 18 über.

Vorzugsweise ist der Grundkörper 6 mit einem reibungsvermindernden Überzug, beispielsweise aus Teflon, überzogen.

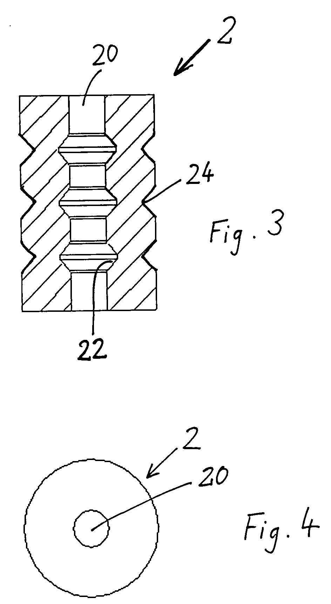

Die Figur 3 zeigt eine Detaildarstellung eines erfindungsgemäßen Elastomerkörpers 2, der alleine oder gemeinsam mit einer Schraubenfeder 3 die Druckfeder für die dargestellte erfindungsgemäße Sattelstütze der Fig. 1 bilden kann. Ein solcher erfindungsgemäßer Elastomerkörper 2 weist eine im wesentlichen zylindrische Form mit einer durchgehenden koaxialen Bohrung 20 auf. Die Bohrung 20 kann durch eine oder mehrere (im dargestellten Falle drei) V-förmige oder keilförmige Nuten 22 erweitert sein, die an der Innenwand der Bohrung horizontal umlaufen.

Ebenso können außen auf der Mantelfläche des zylindrischen Elastomerkörpers 2 horizontal umlaufende V-förmig oder keilförmig ausgebildete Nuten 24 vorgesehen sein. Hier sind ebenfalls drei davon dargestellt. Die Tiefe der Nuten beträgt hier jeweils ein Drittel der Wandstärke des hohlzylindrischen Elastomerkörpers 2.

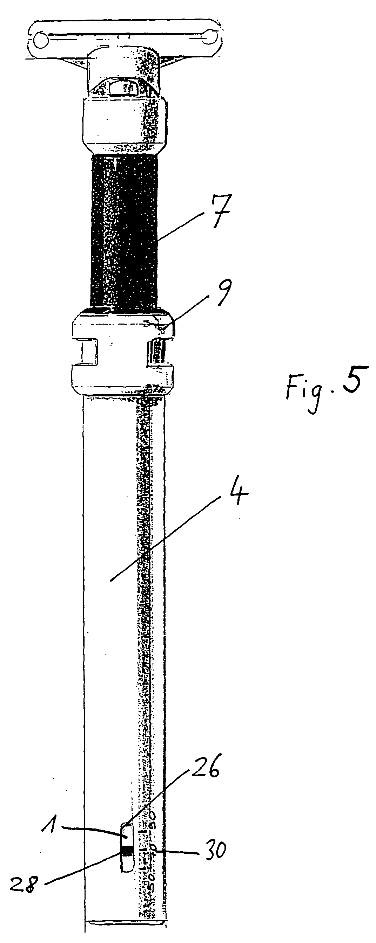

Figur 4 zeigt den Elastomerkörper 2 der Fig. 3 von oben. Deutlich ist die Bohrung 20 erkennbar.

Figur 5 zeigt eine weitere Ausführungsform der vorliegenden Erfindung von der Seite. Auch diese Ausführungsform der vorliegenden Erfindung umfaßt eine äußere Rohrhülse 4, in die eine innere Rohrhülse 7 eingesetzt und mittels einer Schraubkappe 9 darin festgehalten ist.

Die Figur 5 zeigt sehr schön die erfindungsgemäße Anzeigevorrichtung für die Einstellung der Vorspannung der hier nicht sichtbaren Druckfedern 2, 3. Zu diesem Zweck befindet sich nahe dem unteren Ende der äußeren Rohrhülse 4 eine langlochförmige Öffnung 26, durch die ein Teil der Madenschraube 1 sichtbar ist. Die Madenschraube 1 ist dabei mit einer horizontal umlaufenden Markierung 28 versehen, die in Fig. 5 deutlich sichtbar ist. Zur Verbesserung der Wirkung der Anzeigevorrichtung kann die Madenschraube 1 auch mit einer sich nach oben fortsetzenden Hülse verbunden sein, die radial zwischen der Feder und der äußeren Rohrhülse 4 angeordnet ist, und die dann die Markierung 28 trägt. Auf diese Weise wird die Markierung 28 nicht durch die Beanspruchungen des Außengewindes der Madenschraube 1 beeinträchtigt.

Auf der Außenseite der äußeren Rohrhülse 4 ist neben der langlochförmigen Öffnung 26 eine entsprechende Skala 30 angeordnet. Diese Skala 30 kann entweder direkt in Fahrergewicht geeicht sein, oder kann andere Zahlen oder Symbole tragen, die dann mittels einer Tabelle in Abhängigkeit von den Wünschen des Fahrers an die Federung (eher weich komfortable oder eher sportlich harte Federung) in Gewichtswerte umgerechnet werden können.

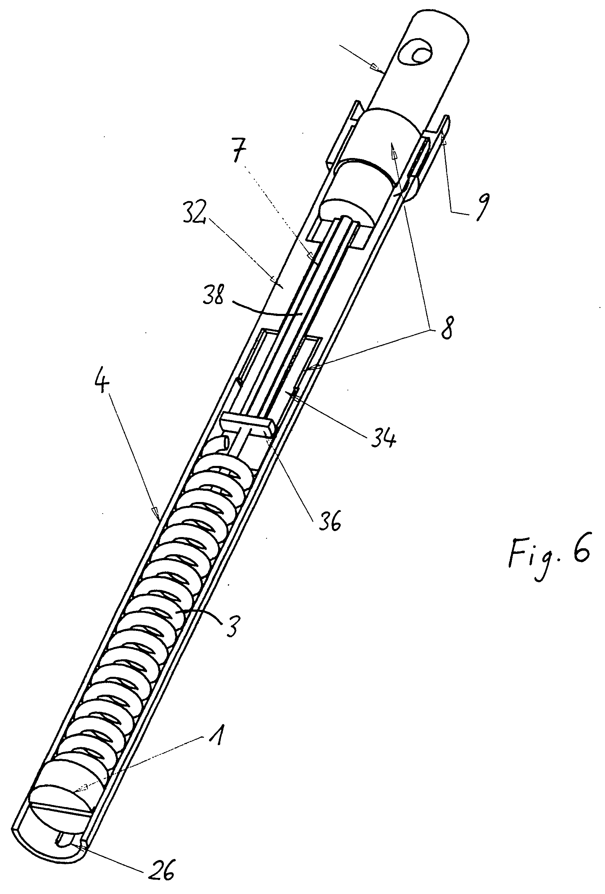

Figur 6 zeigt eine teilweise ausgeschnittene Darstellung einer weiteren erfindungsgemäßen Sattelstütze, wobei zur Verbesserung des räumlichen Eindrucks die Schraffierung geschnittener Teile weggelassen worden ist.

Figur 6 zeigt eine andere Ausführungsform der Führung der inneren Rohrhülse 7 in der äußeren Rohrhülse 4. Auch hier umschließt die äußere Rohrhülse 4 eine Schraubenfeder 3. Im vorliegenden Fall sind keine Elastomerkörper 2 vorgesehen bzw. dargestellt. Die Madenschraube 1 spannt hier ebenfalls die Schraubenfeder 3 vor. Am unteren Ende der äußeren Rohrhülse 4 ist ebenfalls eine langlochförmige Öffnung 26 vorgesehen, die zum Ablesen des Vorspannungszustandes der Schraubenfeder 3 dient. Im vorliegenden Fall ist keine Markierung auf der Madenschraube 1 vorgesehen, sondern zur Anzeige dient einfach die Unterkante der Madenschraube 1, die durch die Öffnung 26 sichtbar ist.

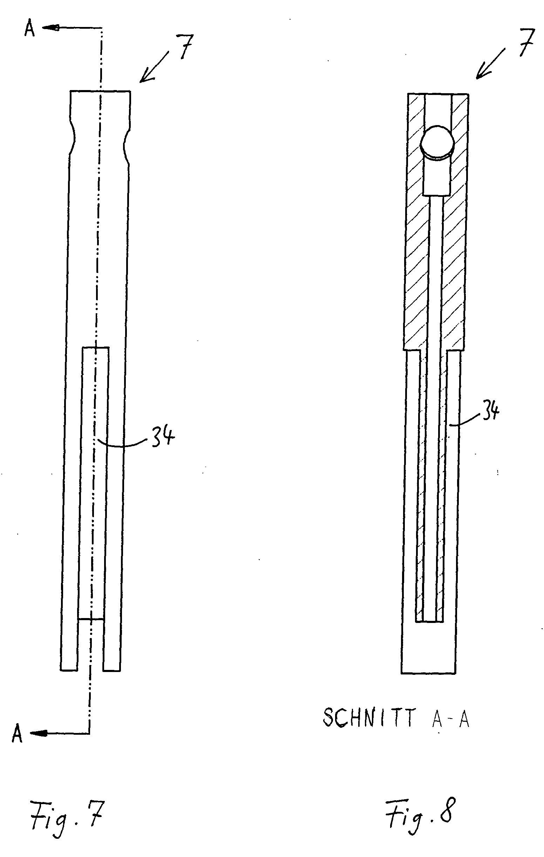

Die nähere Ausgestaltung der äußeren Rohrhülse 4 und der inneren Rohrhülse 7 gemäß der vorliegenden Erfindung kann den folgenden Figuren 7 bis 11 detaillierter entnommen werden.

Zur Verdrehsicherung der inneren Rohrhülse 7 in der äußeren Rohrhülse 4 weist die äußere Rohrhülse 4 in Längsrichtung verlaufende Vorsprünge oder Stege 32 auf, die im vorliegenden Fall geschnitten dargestellt sind, und von einander gegenüberliegenden Seiten der Innenwand der äußeren Rohrhülse 4 nach innen vorspringen.

Die innere Rohrhülse 7 weist entsprechende Nuten 34 auf, die ebenfalls in Längsrichtung verlaufen, und die in den Figuren 7 und 8 deutlicher dargestellt sind, als dies in Fig. 6 möglich wäre.

Am unteren Ende der inneren Rohrhülse 7 ist bei dieser Ausführungsform noch ein Ausfederanschlag 36 vorgesehen. Dieser verhindert bei dieser Ausführungsform, daß die innere Rohrhülse 7 im unbelasteten Zustand nach oben aus der äußeren Rohrhülse 4 herausrutscht. Der Ausfederanschlag 36 wird mittels einer durchlaufenden Gewindestange 38 am unteren Ende der inneren Rohrhülse 7 gehalten, in dem er auf diese Gewindestange 38 aufgeschraubt ist. Die Gewindestange 38 kann zum Zusammenbau und zum Zerlegen der Vorrichtung durch eine axial angeordnete Öffnung in der inneren Rohrhülse 7 von oben betätigt werden.

Auch hier sind Gleitbuchsen 8 zur Lagerung der inneren Rohrhülse 7 in der äußeren Rohrhülse 4 vorgesehen. Diese können beispielsweise aus Teflon bestehen.

Die folgenden Figuren 7 und 8 zeigen die innere Rohrhülse 7 in der Ausführungsform gemäß Fig. 6. Wie in Figur 7 und 8 erkennbar, weist die Rohrhülse 7 eine von oben nach unten durchlaufende Bohrung auf, die am oberen Ende erweitert ist, um Zugang zur Betätigung der Gewindestange 38 zu ermöglichen. Weiter weist die innere Rohrhülse 7 an ihrem oberen Ende eine horizontal durchlaufende Bohrung auf, die zur Befestigung des Sattels dient. Die Nuten 34, die die Vorsprünge 32 aufnehmen, sind deutlich erkennbar. Am unteren Ende der inneren Rohrhülse 7 gehen die Nuten 34 ineinander über, um eine entsprechende Aussparung für den Ausfederanschlag 36 zu bilden.

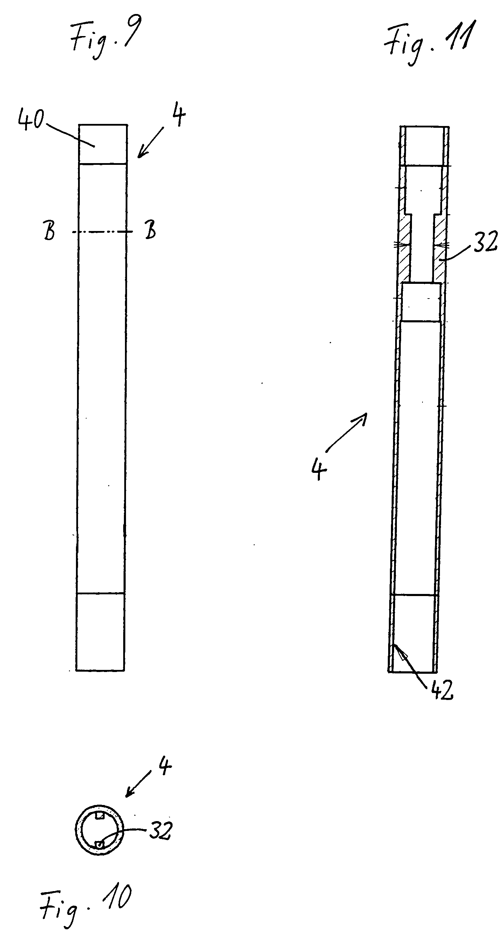

Die Figuren 9 bis 11 zeigen die äußere Rohrhülse 4 in der Ausführungsform gemäß Fig. 6. In Figur 9 ist das Außengewinde 40 für die Schraubkappe 9 deutlich dargestellt.

Die Schnittdarstellung entlang der Linie B-B der Figur 9 ist in Fig. 10 dargestellt. Hier sind die einander gegenüberliegenden Vorsprünge 32 deutlich erkennbar.

Figur 11 zeigt einen Längsschnitt der inneren Rohrhülse 7 gemäß Fig. 9. Hier sind ebenfalls die Vorsprünge 32 deutlich dargestellt. Weiter ist das Innengewinde 42 für die Madenschraube 1 erkennbar.

### BEZUGSZEICHENLISTE

- 1: Madenschraube
- 2: Elastomerkörper
- 3: Schraubenfeder
- 4: Äußere Rohrhülse
- 5: Lagerkappe
- 6: Gleitelement
- 7: Innere Rohrhülse
- 8: Gleitbuchse
- 9: Schraubkappe
- 10: Dichtung
- 12: Schlitze in 7
- 14: Flügel von 6
- 16: Nuten in 4
- 18: Zylindrischer Grundkörper von 6
- 20: Bohrung in 2
- 22: Nuten innen in 20
- 24: Nuten außen bei 2
- 26: Öffnung in 4
- 28: Markierung
- 30: Skala
- 32: Vorsprünge
- 34: Nuten in 7
- 36: Ausfederanschlag
- 38: Gewindestange
- 40: Außengewinde
- 42: Innengewinde

## Patentansprüche

1. Federnde Sattelstütze mit zwei teleskopartig ineinandergreifenden Rohrhülsen (4, 7), deren äußere und untere (4) in den Rahmen eines Fahr- oder Motorrades eingesetzt werden kann, während die innere und obere (7) den Sattel trägt, wobei ein Ineinanderschieben der Rohrhülsen (4, 7) nur gegen den Druck einer Druckfeder (2, 3) möglich ist und die innere Rohrhülse (7) in der äußeren Rohrhülse (4) längs verschiebbar, aber verdrehfest angeordnet ist, **dadurch gekennzeichnet, daß** als Druckfeder (2, 3) alleine oder zusätzlich zu einer metallischen Schraubenfeder (3) ein oder mehrere zylindrische Elastomerkörper (2) vorgesehen sind, die mit einer axial hindurchlaufenden Bohrung (20) und/oder auf ihrer äußeren Mantelfläche mit horizontal umlaufenden Nuten (24) versehen sind.

2. Sattelstütze nach Anspruch 1, **dadurch gekennzeichnet, daß** die axiale Bohrung (20) durch horizontal umlaufende Nuten (22) erweitert ist.

3. Sattelstütze nach Anspruch 1 oder 2, **dadurch gekennzeichnet, daß** die Nuten (22, 24) V-förmig oder keilförmig ausgebildet sind.

4. Federnde Sattelstütze, insbesondere nach Anspruch 1 bis 3, mit zwei teleskopartig ineinandergreifenden Rohrhülsen (4, 7), deren äußere und untere (4) in den Rahmen eines Fahr- oder Motorrades eingesetzt werden kann, während die innere und obere (7) den Sattel trägt, wobei ein Ineinanderschieben der Rohrhülsen (4, 7) nur gegen den Druck einer Druckfeder (2, 3) möglich ist, und die innere Rohrhülse (7) in der äußeren Rohrhülse (4) längs verschiebbar, aber verdrehfest angeordnet ist und die Druckfeder (2, 3) mittels einer in einem Gewinde am unteren Ende der äußeren Rohrhülse (7) verdrehbaren Schraube (1) vorgespannt werden kann, **dadurch gekennzeichnet, daß** eine Anzeigevorrichtung (26) für die Einstellung der Vorspannung vorgesehen ist.

5. Sattelstütze nach Anspruch 4, **dadurch gekennzeichnet, daß** die Anzeigevorrichtung (26) durch eine Öffnung in der Mantelfläche der äußeren Rohrhülse (4) gebildet ist, durch die erkennbar ist, wie weit die Druckfeder (2, 3) bereits durch die Vorspannung komprimiert ist.

6. Federnde Sattelstütze, insbesondere nach Anspruch 1 bis 5, mit zwei teleskopartig ineinandergreifenden Rohrhülsen (4, 7), deren äußere und untere (4) in den Rahmen eines Fahr- oder Motorrades eingesetzt werden kann, während die innere und obere (7) den Sattel trägt, wobei ein Ineinanderschieben der Rohrhülse (4, 7) nur gegen den Druck einer Druckfeder (2, 3) möglich ist und die innere Rohrhülse (7) in der äußeren Rohrhülse (4) längs verschiebbar aber verdrehfest angeordnet ist, indem in dem unteren Ende der inneren Rohrhülse (7) in Längsrichtung verlaufende Schlitze (12) angeordnet sind, in die ein zylindrisches Gleitelement (6) mit in Längsrichtung verlaufenden, rechteckigen Flügeln (14) eingesetzt ist, deren Erstreckung nach außen so groß ist, daß sie aus den Schlitzen (12) heraustreten und in Nuten (16) eingreifen, die an der Innenfläche der äußeren Rohrhülse (4) in Längsrichtung angeordnet sind.

7. Sattelstütze nach Anspruch 6, **dadurch gekennzeichnet, daß** das Gleitelement (6) mit einem reibungsverringernden Überzug, beispielsweise aus Teflon, überzogen, oder aus einem reibungsverringernden Material hergestellt ist.

8. Federnde Sattelstütze, insbesondere nach Anspruch 1 bis 5, mit zwei teleskopartig ineinandergreifenden Rohrhülsen (4, 7), deren äußere und untere (4) in den Rahmen eines Fahr- oder Motorrades eingesetzt werden kann, während die innere und obere (7) den Sattel trägt, wobei ein Ineinanderschieben der Rohrhülsen (4, 7) nur gegen den Druck einer Druckfeder (2, 3) möglich ist und die innere Rohrhülse (7) in der äußeren Rohrhülse (4) längs verschiebbar, aber verdrehfest angeordnet ist, **dadurch gekennzeichnet, daß** an der inneren Rohrhülse (7) in Längsrichtung verlaufende Nuten (34) vorgesehen sind, in die an der äußeren Rohrhülse (4) angeordnete in Längsrichtung verlaufende Vorsprünge (32) eingreifen.

9. Sattelstütze nach Anspruch 8, **dadurch gekennzeichnet, daß** jeweils zwei einander gegenüberliegende Nuten (34) und Vorsprünge (32) vorgesehen sind.
